# EUROPÄISCHE PATENTANMELDUNG

(11) **EP 0 760 265 A1**
(43) Veröffentlichungstag der Anmeldung: **05.03.1997**
(21) Anmeldenummer: 95113418.8
(22) Anmeldetag: 26.08.1995
(51) Int. Cl.: B21D 26/02, B21D 53/86

(54) **Rohr zur Verwendung bei der Herstellung von Kraftfahrzeugkomponenten und Kraftfahrzeugachse mit einem solchen Rohr**

(71) Anmelder: BENTELER AG, D-33104 Paderborn (DE)
(72) Erfinder: Hansen, Rainer, D-33106 Paderborn (DE); Olszewski, Egon, D-33106 Paderborn (DE)
(74) Vertreter: Bockermann, Rolf, Dipl.-Ing.

(57) **Zusammenfassung**

Die Erfindung betrifft ein Rohr 11 zur Verwendung bei der Herstellung einer Vorderachse 10. Die Dicke der Rohrwand 15 ist in Abhängigkeit von der späteren Belastung der Vorderachse 10 im Kraftfahrzeug in dem Bereich C gegenüber der Ausgangsdicke reduziert. Die Wanddickenreduktion erfolgt durch Abstrecken an der Rohrinnenseite 16 des Rohrs 11. Damit wird eine Material- und Gewichtseinsparung an der Vorderachse 10 erreicht.

## Beschreibung

Die Erfindung betrifft ein Rohr zur Verwendung bei der Herstellung von Kraftfahrzeugkomponenten, insbesondere für Fahrzeugachsen oder für Seitenaufprallträger sowie eine Achse mit einem solchen Rohr.

In der Kraftfahrzeugkonzeption genügt es nicht mehr, nur technische Aufgaben zu lösen und Transportbedürfnisse zu erfüllen. Ansprüche der Natur und der Gesellschaft verlangen zunehmend stärkere Berücksichtigung. Hierzu zählen beispielsweise die Verminderung des Schadstoffausstoßes der Kraftfahrzeuge sowie die Senkung des Kraftstoffverbrauchs. Demzufolge ist das allgemeine Bestreben, die Kraftfahrzeuge möglichst ökonomisch zu gestalten. Innerhalb dieser Zielstruktur richtet sich eine grundsätzliche Tendenz zum Leichtbau der Kraftfahrzeuge bzw. von Kraftfahrzeugkomponenten, um so den Materialbedarf, den Kraftstoffverbrauch und die Emissionen zu reduzieren. Gleichzeitig müssen die Kraftfahrzeuge bzw. die Kraftfahrzeugkomponenten aber hohe Sicherheitsstandards erfüllen, da sie teilweise extremen statischen und dynamischen Betriebslasten ausgesetzt sind.

Durch die DE 42 31 213 A1 gehört es zum Stand der Technik, durch Pressen oder Tiefziehen gefertigte Formkörper mit unterschiedlichen Wandstärken zu versehen, um auf diese Weise einerseits den zu erwartenden Belastungen gerecht zu werden und andererseits entsprechend Material einzusparen. Als Ausgangsprodukt kommen hier einstückige Bleche zur Anwendung, die eine bereichsweise Dickenreduktion vor dem Umformvorgang erhalten. Diese Vorgehensweise hat sich für die Herstellung solcher Formteile bewährt.

Ein ähnlicher Weg wird in der DE 33 43 709 A1 vorgeschlagen. Hier werden Metallbleche walztechnisch mit Vertiefungen versehen, zu einem Kastenprofil gebogen und anschließend entlang der freien Längskanten des Metallbleches verschweißt. Schweißarbeiten wirken sich aber bei einer Massenproduktion wie in der Automobilindustrie häufig nachteilig aus. Abgesehen von den damit verbundenen zusätzlichen Kosten bilden Schweißnähte potentielle Schwachstellen, welche die Standzeit der Kraftfahrzeugkomponeten beeinträchtigen kann.

In dem Bestreben, Kraftfahrzeugkomponenten möglichst gewichtsoptimiert zu gestalten, ist es weiterhin bekannt, solche Teile aus Rohren herzustellen. Rohre weisen zudem Vorteile hinsichtlich ihres Festigkeitsverhaltens auf.

Bei aus Rohrkonstruktionen hergestellten Kraftfahrzeugkomponenten, wie beispielsweise Hinter- oder Vorderachsen oder auch Seitenaufprallträgern, hat es sich herausgestellt, daß diese Teile hinsichtlich des Materialeinsatzes und des Gewichtes optimiert werden können. In den Bereichen, wo solche Kraftfahrzeugkomponenten geringeren Belastungen unterworfen sind, treten nämlich kleinere Spannungsspitzen auf als in den Bereichen mit größeren Belastungen. Dennoch ist dort durch das gleichmäßig dicke Ausgangsmaterial dieselbe vorgegebene Dicke vorhanden. Um den hohen Sicherheitskriterien gerecht zu werden, hat man bislang ein höheres Gewicht in Kauf genommen, obwohl wenig belastete Bauteilzonen nur reduzierte Wanddicken benötigen würden.

Der Erfindung liegt ausgehend vom Stand der Technik die Aufgabe zugrunde, ein Rohr zur Verwendung bei der Herstellung von Kraftfahrzeugkomponenten bereitzustellen, welches eine material- und gewichtssparende Bauweise der Kraftfahrzeugkomponenten unter Vermeidung von Schweißarbeiten ermöglicht und hinsichtlich der Dicke der unterschiedlichen Bauteilzonen gezielt auf die dort jeweils auftretenden Spannungen im Fahrbetrieb abgestimmt werden kann.

Die Lösung dieser Aufgabe besteht nach der Erfindung in den im kennzeichnenden Teil des Anspruchs 1 aufgeführten Merkmalen.

Kernpunkt der Erfindung bildet die Maßnahme, die Dicke der Rohrwand in Abhängigkeit von der späteren Belastung im Kraftfahrzeug bereichsweise gegenüber der Ausgangsdicke zu reduzieren. Diese Wanddickenreduktion wird durch eine spanlose Umformung realisiert. Eine solche Umformung ist mit engen Toleranzen möglich. Damit wird das Ausgangsrohr in eine geometrische Form gebracht, welche der späteren Verwendung im Kraftfahrzeug angepaßt ist, wobei der Faserverlauf erhalten bleibt.

Durch die Vorfertigung solcher Rohre ist es möglich, die später innerhalb der Kraftfahrzeugkomponenten wenig belasteten Bauteilzonen gezielt mit geringerer Wandstärke auszubilden. Damit wird eine weitere Gewichtseinsparung der Kraftfahrzeugkomponenten erreicht. Vorteilhaft wirkt sich auch aus, daß die Kraftfahrzeugkomponenten mit dieser Konstruktion eine annähernd konstante Spannung aufweisen bzw. die spezifische Belastung annähernd konstant ist.

Schweißarbeiten sind bei der Vorfertigung der Rohre vollkommen unnötig.

Eine besonders vorteilhafte Weiterverarbeitung der anwendungstechnisch optimierten Rohre zu den späteren Kraftfahrzeugkomponenten wird in der Hydroformfertigung gesehen. Die hydraulische Umformung ermöglicht hohe Standmengen bei geringem Ausschuß und guter Oberflächenbeschaffenheit. Infolge der guten Einstellbarkeit läßt sich die Hydroformfertigung gezielt auf die Verarbeitung der wanddickenreduzierten, rohrförmigen Bauteile abstimmen.

Die Vorfertigung der Rohre kann unabhängig von der späteren Weiterverarbeitung erfolgen, so daß sich die Produktionsabläufe gegenseitig nicht beeinflussen.

Obwohl grundsätzlich die bereichsweise Wanddickenreduktion des Rohrs durch verschiedene spanlose Umformtechniken erreicht werden kann, wird eine besonders vorteilhafte Weiterbildung der Erfindung nach den Merkmalen des Anspruchs 2 darin gesehen, die Wanddickenreduktion durch Abstrecken zu bewirken.

Hierbei wird die gewünschte Wanddicke durch Zugdruckumformen erreicht, bei der das Material plastisch verformt wird. Üblicherweise wird die formgebende Werkzeugöffnung durch eine Ziehmatritze oder durch Walzen gebildet. Innenseitig der Rohre kann mit einem festen oder losen Stopfen bzw. Dorn gearbeitet werden.

Nach den Merkmalen des Anspruchs 3 kann die Wanddickenreduktion sowohl an der Rohrinnenseite als auch an der Rohraußenseite vorgenommen werden. Welche Bereiche des Rohres in der Wanddicke reduziert werden, hängt von der jeweiligen Weiterverwendung des Rohres ab. Selbstverständlich können auch bei einem Rohr mehrere Bereiche mit unterschiedlichen Wanddicken vorgesehen sein.

Grundsätzlich kann das erfindungsgemäße Rohr für alle rohrförmigen Komponenten des Kraftfahrzeugbaus mit Zonen unterschiedlicher Belastung verwendet werden.

Insbesondere die Verwendung der erfindungsgemäßen Rohre für die Herstellung von Fahrzeugachsen, wie dies Anspruch 4 vorsieht, erlaubt es, Gewichtseinsparungen zu realisieren und eine Optimierung des Materialeinsatzes zu erreichen. Eine solche Achse zeichnet sich desweiteren durch die gleichmäßige Spannungsverteilung mit einem nahezu konstanten Festigkeitsverhalten aus. Den beim Fahren auftretenden Lastwechselreaktionen kann so entgegengetreten werden.

Schließlich wird eine weitere vorteilhafte Ausführungsform der Erfindung in den Merkmalen des Anspruchs 5 gesehen. Danach ist bei einer Kraftfahrzeugachse der Mittenbereich und/oder der Längsbereich entsprechend in der Wanddicke reduziert. Eine solche Vorderachse bzw. Hinterachse wird ebenfalls aus einem vorgefertigten Rohr, dessen Wanddicke im Bereich des späteren Mittenbereichs und/oder Längsbereichs reduziert ist, auf hydroformtechnischem Wege hergestellt.

Die Kraftfahrzeugachsen zeichnen sich durch ihr geringes Gewicht unter Einhaltung der sicherheitstechnischen Anforderungen aus. Gleichzeitig gewährleisten die Kraftfahrzeugachsen die erforderliche Elastizität, um das Fahren komfortabel zu machen.

Die Erfindung ist nachfolgend anhand von in den Zeichnungen dargestellten Ausführungsbeispielen näher beschrieben. Es zeigen:
- Figur 1: einen Rohrausschnitt mit einer Wanddickenreduktion an der Rohrinnseite;
- Figur 2: einen Rohrausschnitt mit einer Wanddickenreduktion an der Rohraußenseite und
- Figur 3: eine Vorderachse aus einem im Mittenbereich in der Wanddicke reduzierten Rohr.

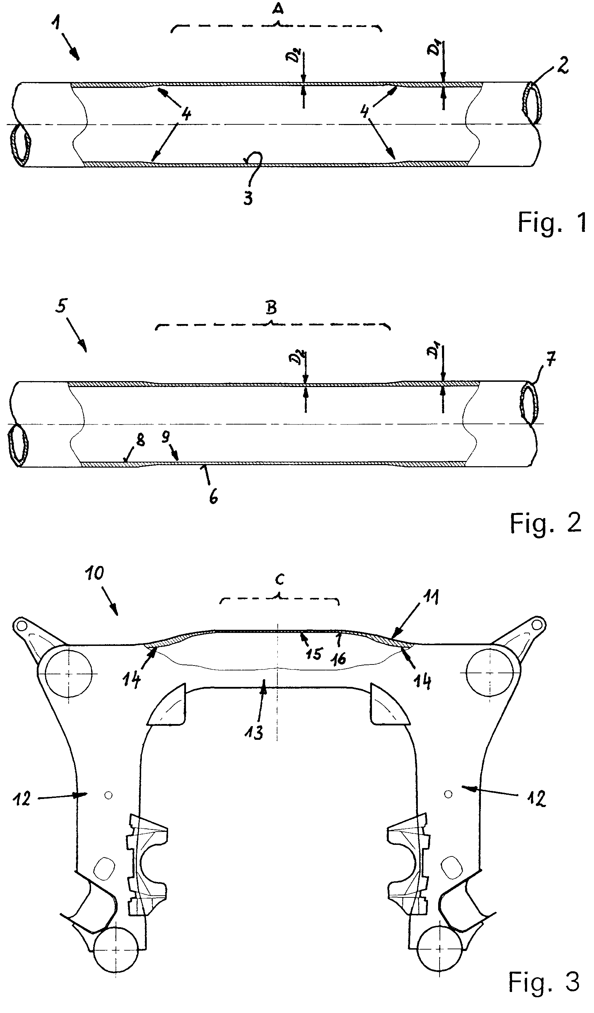

Die Figur 1 zeigt einen Ausschnitt aus einem Rohr 1. Die Rohrwand 2 weist eine annähernd konstante Ausgangsdicke D₁ auf. In dem mit A bezeichneten Bereich ist die Rohrwand 2 auf die Dicke D₂ reduziert. Diese partielle Wanddickenreduktion ist abstrecktechnisch an der Rohrinnenseite 3 vorgenommen. Die Übergänge von der Ausgangsdicke D₁ auf die reduzierte Dicke D₂ in den mit 4 bezeichneten Bereichen erfolgen stufenlos.

Aus der Figur 2 geht ein Rohr 5 hervor, bei dem die Wanddickenreduktion in dem Bereich B an der Rohraußenseite 6 vorgenommen worden ist. Die Rohrwand 7 ist wiederum von der Ausgangsdicke D₁ auf die Dicke D₂ reduziert unter Beibehaltung einer gleichmäßig glatten Oberfläche 8 an der Rohrinnenseite 9.

Die in den Figuren 1 und 2 dargestellten Rohre 1 und 5 sind vorgefertigte Ausgangsprodukte für die Herstellung von Kraftfahrzeugkomponenten. Die Wanddickenreduktion in den Bereichen A bzw. B wird gezielt dort vorgenommen, wo die später aus den Rohren 1, 5 gefertigten Kraftfahrzeugkomponenten geringerer Belastung unterworfen sind.

Die Figur 3 zeigt eine Vorderachse 10, welche hydroformtechnisch aus einem Rohr 11 hergestellt ist.

Die Vorderachse 10 umfaßt im wesentlichen zwei rohrförmige Längsbereiche 12 und den Mittenbereich 13. Der Mittenbereich 13 überträgt insbesondere Torsions- und Biegekräfte, die vom Längsbereich 12 in den Mittenbereich 13 geleitet werden. In Zonen hoher Belastung 14 und 12 weist die Vorderachse 10 die entsprechend den zu erwartenden Spannungen notwendige Dicke auf.

Im mittleren Bereich C erfährt der Mittenbereich 13 hingegen eine im Vergleich zu den übrigen Bauteilzonen geringere Belastung. Demzufolge ist die Wanddicke 15 in diesem Bereich zum Zwecke der Gewichtseinsparung reduziert. Die Wanddickenreduktion ist an der Rohrinnenseite 16 des Rohres 11 erfolgt, bevor dieses zur Vorderachse 10 umgeformt worden ist.

Eine nicht im Detail beschriebene Variante sieht vor, daß auch die in der Figur 3 mit dem Bezugszeichen 12 versehenen Längsbereiche in Zonen geringer Belastung eine Wanddickenreduktion erfahren.

### Bezugszeichenaufstellung

- 1: - Rohr
- 2: - Rohrwand
- 3: - Rohrinnenseite
- 4: - Bereich v. 1
- 5: - Rohr
- 6: - Rohraußenseite
- 7: - Rohrwand
- 8: - Oberfläche v. 9
- 9: - Rohrinnenseite
- 10: - Vorderachse
- 11: - Rohr
- 12: - Längsbereich
- 13: - Mittenbereich
- 14: - Zone v. 10
- 15: - Wanddicke
- 16: - Rohrinnenseite
- A: - Bereich der Wanddickenreduktion
- B: - Bereich der Wanddickenreduktion
- C: - Bereich der Wanddickenreduktion
- D₁: - Dicke v. 2
- D₂: - Dicke v. 2

## Patentansprüche

1. Rohr (1, 5, 11) zur Verwendung bei der Herstellung von Kraftfahrzeugkomponenten, insbesondere für Fahrzeugachsen oder für Seitenaufprallträger, **dadurch gekennzeichnet**, daß die Dicke der Rohrwand (2, 7, 16) in Abhängigkeit von der späteren Belastung im Kraftfahrzeug bereichsweise durch spanlose Umformung gegenüber der Ausgangsdicke (D₁) reduziert ist.

2. Rohr nach Anspruch 1, **dadurch gekennzeichnet**, daß die Wanddickenreduktion durch Abstrecken bewirkt ist.

3. Rohr nach Anspruch 1 oder 2, **dadurch gekennzeichnet**, daß die Wanddickenreduktion an der Rohrinnenseite (3, 17) und/oder an der Rohraußenseite (6) durchführbar ist.

4. Achse für Kraftfahrzeuge mit einem Träger aus einem Rohr gemäß einem der Ansprüche 1 bis 3.

5. Achse (10) für Kraftfahrzeuge, **dadurch gekennzeichnet**, daß der Mittenbereich (13) und/oder der Längsbereich (12) entsprechend einem der Ansprüche 1 bis 3 in der Wanddicke (15) reduziert ist.
